# EUROPÄISCHE PATENTANMELDUNG

(11) **EP 0 774 484 A2**
(43) Veröffentlichungstag der Anmeldung: **21.05.1997**
(21) Anmeldenummer: 96114856.6
(22) Anmeldetag: 17.09.1996
(51) Int. Cl.: C08J 9/16

(54) **Verfahren zur Herstellung von polyolefinischem Partikelschaum**

(30) Priorität: 16.11.1995 DE 19542734
(71) Anmelder: HÜLS AKTIENGESELLSCHAFT, 45764 Marl (DE)
(72) Erfinder: Wirobski, Reinhardt, 45768 Marl (DE)

(57) **Zusammenfassung**

Mit Zusatzstoffen ausgerüstete polyolefinische Schaumpartikel werden durch ein Verfahren hergestellt, bei dem
a) in einem druckfesten Reaktor eine Dispersion, die im wesentlichen aus Polyolefinteilchen und einem flüssigen Dispersionsmittel besteht, sowie eine Mischung aus einem flüchtigen organischen Treibmittel und dem einzubringenden Additiv vorgelegt wird,
b) eine Wärmebehandlung durchgeführt wird, wobei die Polyolefinteilchen mit der Mischung imprägniert werden, und anschließend
c) die Dispersion durch eine Öffnung in einen Niederdruckraum entlassen wird, wobei die Polymerpartikel verschäumt werden.

Mit diesem Verfahren wird eine effiziente Einlagerung der Additive in die Polyolefinpartikel erreicht. Die so erhaltenen Schaumpartikel werden für die Herstellung von Formteilen verwendet.

## Beschreibung

Gegenstand der Erfindung sind polyolefinische Schaumpartikel, die während ihrer Herstellung im Dispersionsverfahren mit Zusatzstoffen ausgerüstet wurden, sowie ein Verfahren zu ihrer Herstellung als auch aus diesen Schaumpartikeln hergestellte Formteile.

Die Herstellung von polyolefinischem Partikelschaum nach dem Dispersionsverfahren ist Stand der Technik und in einer Vielzahl von Anmeldungen, beispielsweise der EP-A-0 053 333 und der EP-A-0 095 109, beschrieben. Derart hergestellter Partikelschaum kann nach bekannten Methoden zu Formteilen verarbeitet werden.

Aufgrund ihres Eigenschaftsbildes finden polyolefinische Partikelschaumstoffe bzw. die daraus hergestellten Formteile eine vielseitige Verwendung. Für bestimmte Anwendungsgebiete müssen jedoch die Eigenschaften des Partikelschaumes modifiziert werden. Beispielsweise wird im Bausektor häufig eine Flammschutzausrüstung verlangt, während in der Elektroindustrie oft eine Antistatikausrüstung gefragt ist. In anderen Fällen wird vom Markt eine Einfärbung gewünscht.

Verfahren zur Ausrüstung von Partikelschaumstoffen sind bekannt. Dabei wird üblicherweise der Partikelschaum durch nachträgliches "Coaten" mit der gewünschten Ausrüstung versehen (DE-OS 42 35 693). Dies stellt jedoch in der Regel für den Verarbeiter einen zusätzlichen Arbeitsschritt dar. Zudem wird ein Abrieb der wirksamen Komponente vom Formteil beobachtet. Bei der Verarbeitung kann das Kühlwasser kontaminiert werden. Zur guten Verschweißung der Schaumperlen ist darüber hinaus eine intensive Bedampfung erforderlich.

Es stellte sich daher die Aufgabe, ein Verfahren bereitzustellen, bei dem die angeführten Nachteile nicht auftreten. Überraschenderweise konnte diese Aufgabe durch ein Verfahren zur Ausrüstung von Partikelschaum gelöst werden, bei dem
a) in einem druckfesten Reaktor eine Dispersion, die im wesentlichen aus Polyolefinteilchen und einem flüssigen Dispersionsmittel besteht, sowie eine Mischung aus einem flüchtigen organischen Treibmittel und dem einzubringenden Additiv vorgelegt wird,
b) eine Wärmebehandlung durchgeführt wird, wobei die Polyolefinteilchen mit der Mischung imprägniert werden, und anschließend
c) die Dispersion durch eine Öffnung in einen Niederdruckraum entlassen wird, wobei die Polymerpartikel verschäumt werden.

Im folgenden soll die Erfindung näher erläutert werden.

Als Polyolefine sind beispielsweise Propylenpolymere wie Propylen-Ethylen- oder Propylen-Butylen-Randomcopolymere, Random-Terpolymere von Ethylen, Propylen und Buten-1, Ethylen-Propylen-Blockcopolymere und Homopolypropylen, Ethylenpolymere wie Polyethylen niedriger, mittlerer oder hoher Dichte, lineares Polyethylen niedriger Dichte, Ethylen-Vinylacetat-Copolymere, Ethylen-Methylmethacrylat-Copolymere, Ionomere oder andere Polyolefine wie Polybuten-1 geeignet. Bevorzugt wird ein Ethylen-Propylen-Randomcopolymeres mit 1 bis 15 Gew.-% Ethylen eingesetzt.

Diese Polymere liegen als diskrete Partikel, beispielsweise als Granulat, vor. Sie haben vorzugsweise einen mittleren Teilchendurchmesser von 0,5 bis 5 mm. Um eine gleichmäßige Schäumung zu erzielen, können sie gegebenenfalls, dem Stand der Technik entsprechend, einen Füllstoff enthalten, der als Keimbildner wirkt.

Als Dispersionsmittel wird vorzugsweise Wasser verwendet. Geeignet sind jedoch beispielsweise auch Alkohole wie Methanol oder Ethanol.

Um ein Agglomerieren zu verhindern, kann der Mischung von Polymerteilchen und Dispersionsmittel ein feinteiliges Dispergierhilfsmittel und/oder eine oberflächenaktive Verbindung Zugesetzt werden. Beispiele hierfür sind Calciumphosphat, basisches Magnesiumcarbonat, basisches Zinkcarbonat, Calciumcarbonat, Aluminiumoxid, Bariumsulfat, Talkum, Alkylbenzolsulfonate, Paraffinsulfonate oder Ethoxylate.

Geeignete organische Treibmittel sind aus dem Stand der Technik bekannt; beispielsweise können gesättigte aliphatische Kohlenwasserstoffe wie Ethan, Propan, n-Butan, i-Butan, Pentan oder Hexan, alicyclische Kohlenwasserstoffe wie Cyclopentan oder Cyclohexan, halogenierte Kohlenwasserstoffe wie Trichlormonofluormethan, Dichlordifluormethan, Dichlortetrafluorethan, Trichlortrifluorethan, Dichlormonofluormethan, Methylchlorid, Methylenchlorid oder Ethylchlorid, jeweils einzeln oder als Mischung, verwendet werden.

Das einzubringende Additiv ist vorzugsweise ein Flammschutzmittel, ein Antistatikum und/oder ein Farbstoff.

Geeignete Flammschutzmittel sind bekannt und sind beispielsweise in Gächter/Müller, Taschenbuch der Kunststoff-Additive, 3. Ausgabe, Carl Hanser Verlag München 1989, Seite 749 ff. beschrieben. Entsprechend dem Stand der Technik kann der Effekt durch Zusatz eines Synergisten verstärkt werden.

Geeignete Antistatika sind ebenfalls bekannt; sie sind beispielsweise im obengenannten Taschenbuch von Gächter/Müller auf den Seiten 798 ff. beschrieben.

Geeignete Farbstoffe sind solche, die im flüchtigen organischen Treibmittel löslich sind. Beispielsweise können die Farbstoffe verwendet werden, die in dem genannten Taschenbuch von Gächter/Müller auf den Seiten 679 ff. beschrieben sind.

Die Verschäumung kann nach jedem Verfahren des Standes der Technik vorgenommen werden. Insbesondere sei auf EP-A-0 053 333, EP-A-0 095 109, EP-A-0 630 935 und EP-A-0 646 619 ausdrücklich Bezug genommen.

Bei der Imprägnierung der erweichten Polyolefinpartikel mit einem organischen Treibmittel werden die im Treibmittel gelösten Additive in die Polyolefin-Matrix "eingeschleppt". Die Eindringtiefe der Additive ist vom Erweichungsgrad des Polyolefins und der Imprägnierdauer abhängig. Jedoch wird unter den Bedingungen, die bei einer Partikelschaumherstellung nach dem Dispersionsverfahren üblich sind, eine effiziente Einlagerung der Additive in die Polyolefinmatrix erreicht.

Die Wärmebehandlung wird im allgemeinen im Temperaturbereich zwischen Tₘ - 30 °C und Tₘ + 10 °C über einen Zeitraum von 5 Minuten bis 2 Stunden, vorzugsweise von 15 bis 60 Minuten, durchgeführt.

Die Dispersion wird anschließend durch eine Öffnung in einen Niederdruckraum entlassen. Die Öffnung kann jede aus dem Stand der Technik bekannte Geometrie besitzen. Der Druck im Niederdruckraum liegt in der Regel in der Nähe des Atmosphärendrucks.

Die geschäumten Polymerpartikel werden anschließend auf übliche Weise abgetrennt und getrocknet. Sie können mit bekannten Methoden zu Formteilen verarbeitet werden. In den dafür verwendeten Maschinen wird der Polymerschaum unter Druck mit Hilfe von Wasserdampf von z. B. 1 bis 5 bar aufgeweicht bzw. angeschmolzen, wobei die einzelnen Schaumpartikel zu einem Formteil verschweißen.

In den folgenden Beispielen wird die Erfindung näher erläutert. Die angegebenen Mengen sind jeweils Gewichtsteile.

### Allgemeine Versuchsdurchführung:

In einem 40 l-Reaktor wird eine Suspension, bestehend aus
- 100 Tln.: Wasser,
- 15 Tln.: eines Ethylen-Propylen-Randomcopolymerisats mit Tm = 143 °C,
- 7,6 Tln.: n-Butan,
- 0,3 Tln.: MARLOWET ® R 40,
- 0,01 Tln.: MARLON ® A 360
sowie dem in den Beispielen spezifizierten Zusatzstoff
unter Rühren auf 130 °C erhitzt und 30 Minuten bei dieser Temperatur gerührt. Nach Ablauf dieser Haltezeit wird der Reaktordruck mit Stickstoff auf 28 bar erhöht und der Inhalt über eine Düse in einen Niederdruckraum ausgetragen, wobei die Polymerpartikel aufschäumen. Die Schüttdichte beträgt 24 g/l.

Die geschäumten Partikel werden getrocknet und anschließend mit einem Formteilautomaten nach dem Kompressionsverfahren zu Formteilen verarbeitet. Von den Formteilen werden Prüfkörper zur Ermittlung der fraglichen Eigenschaften entnommen.

### Vergleichsbeispiel 1:

Prüfkörper aus Formteilen des ohne Zusatzstoff hergestellten Partikelschaumes erfüllen nicht die Anforderungen der DIN 4102 B2 ("normal entflammbar"). Darüber hinaus wird nach DIN 53 486 ein Oberflächenwiderstand von 10¹³ bis 10¹⁵ Ohm gemessen.

### Beispiel 1:

Es wird wie im Vergleichsbeispiel 1 gearbeitet, mit dem alleinigen Unterschied, daß dem Treibmittel ein flammhemmendes System zugesetzt wird (1,6 Gew.-% Dicumylperoxid als Synergist und 2,0 Gew.-% Hexabromcyclododecan, jeweils bezogen auf das Copolymerisat). Nach der Verarbeitung des erhaltenen Partikelschaumes werden Formteile erhalten, die die Anforderung der DIN 4102 B2 erfüllen.

### Beispiel 2:

Es wird wie im Vergleichsbeispiel 1 gearbeitet, mit dem alleinigen Unterschied, daß dem Treibmittel 3,5 Gew.-%, bezogen auf das Copolymerisat, Fettsäureester als Antistatikum zugesetzt werden. Nach der Verarbeitung werden Formteile erhalten, die nach DIN 53 486 einen Oberflächenwiderstand von etwa 10⁸ bis 10¹⁰ Ohm haben.

### Beispiel 3:

Es wird wie im Vergleichsbeispiel 1 gearbeitet, mit dem alleinigen Unterschied, daß dem Treibmittel ein wasserunlöslicher organischer Pigmentfarbstoff zugesetzt wird [2,0 Gew.-%, bezogen auf das Copolymerisat, Anthrachinonfarbstoff (Macrolex Rot GS)]. Nach der Verarbeitung des Partikelschaumes werden gut eingefärbte Formteile erhalten.

Entsprechende Ergebnisse werden auch mit Macrolex Schwarz erzielt.

## Patentansprüche

1. Verfahren zur Ausrüstung von Partikelschaum, bei dem
a) in einem druckfesten Reaktor eine Dispersion, die im wesentlichen aus Polyolefinteilchen und einem flüssigen Dispersionsmittel besteht, sowie eine Mischung aus einem flüchtigen organischen Treibmittel und dem einzubringenden Additiv vorgelegt wird,
b) eine Wärmebehandlung durchgeführt wird, wobei die Polyolefinteilchen mit der Mischung imprägniert werden, und anschließend
c) die Dispersion durch eine Öffnung in einen Niederdruckraum entlassen wird, wobei die Polymerpartikel verschäumt werden.

2. Verfahren gemäß Anspruch 1,
dadurch gekennzeichnet,
daß das einzubringende Additiv ein Flammschutzmittel, ein Antistatikum und/oder ein Farbstoff ist.

3. Verfahren gemäß einem der vorhergehenden Ansprüche,
dadurch gekennzeichnet,
daß als Polyolefin ein Ethylen-Propylen-Randomcopolymeres mit 1 bis 15 Gew.-% Ethylen eingesetzt wird.

4. Partikelschaum, hergestellt gemäß einem der vorhergehenden Ansprüche.

5. Formteil, hergestellt aus dem Partikelschaum gemäß Anspruch 4.
